# EUROPÄISCHE PATENTSCHRIFT

(11) **EP 3 013 581 B1**
(45) Veröffentlichungstag und Bekanntmachung des Hinweises auf die Patenterteilung: **14.11.2018**
(21) Anmeldenummer: 14732149.1
(22) Anmeldetag: 17.06.2014
(51) Int. Cl.: B32B 21/08, B32B 27/42, C08G 12/00

(54) **LAMINAT MIT AMINOPLASTHARZ ENTHALTENDER BESCHICHTUNG**
LAMINATE HAVING AN AMINOPLAST RESIN-CONTAINING COATING
STRATIFIÉ COMPORTANT UN REVÊTEMENT CONTENANT DE LA RÉSINE AMINOPLASTE

(30) Priorität: 25.06.2013 DE 102013010494
(43) Veröffentlichungstag der Anmeldung: 04.05.2016
(73) Patentinhaber: Fritz Egger GmbH & Co. OG, 6380 St. Johann in Tirol (AT)
(72) Erfinder: GEYER, Andreas, A-3500 Krems (AT); SCHALKHAMMER, Thomas, 2811 Wiesmath (AT)
(74) Vertreter: Cohausz & Florack
(86) Internationale Anmeldenummer: PCT/EP2014/062650
(87) Internationale Veröffentlichungsnummer: WO 2014/206802

(56) Entgegenhaltungen:
- WO-A1-2011/101301

## Beschreibung

Die Erfindung betrifft ein Laminat, welches mindestens eine Schicht aufweist, die ein Aminoplastharz enthält. Die Erfindung betrifft ferner die Verwendung eines Aminoplastharzes als Imprägnierharz oder Flüssigoverlay in der Imprägnat- oder Laminatherstellung oder zur Oberflächenbehandlung von Holzwerkstoffen. Schließlich betrifft die Erfindung ein Verfahren zur Herstellung eines solchen Aminoplastharzes sowie ein durch dieses Verfahren erhältliches Aminoplastharz.

Aminoplastharze sind in der holzverarbeitenden Industrie in Form von Tränkharzen und sogenannten Flüssig Overlay-Schichten allgemein bekannt. Sie werden beispielsweise in "Ullmanns Enzyklopädie der technischen Chemie", 4. Auflage, 1974, im Kapitel "Aminoplaste" in Band 7 beschrieben.

Laminat, wie hier verwendet, bezeichnet ein Erzeugnis, das mindestens zwei flächig miteinander verbundene Schichten umfasst. Diese Schichten können aus gleichen oder unterschiedlichen Materialien bestehen.

Laminate, die als Fußbodenpaneele verwendet werden, weisen üblicherweise einen schichtweisen Aufbau auf, wobei die oberste Schicht meist aus einem mit einem Aminoplastharz imprägnierten Overlay- oder Dekorpapier besteht. Die oberste Schicht kann jedoch auch eine eigens aufgetragene Schicht Aminoplastharz, beispielsweise in Form eines sogenannten Flüssig Overlays, sein. Overlaypapier und Flüssig Overlay Schichten dienen dem Schutz der Oberfläche vor äußeren Einflüssen wie Abnutzung und Verkratzung. Ein Dekorpapier ist ein bedrucktes oder gefärbtes Spezialpapier, das zur dekorativen Beschichtung von Holzwerkstoffen verwendet wird.

Unter dem Begriff Aminoplaste versteht man allgemein Polykondensationsprodukte, die durch Umsetzung einer Carbonylverbindung, in der Praxis meist Formaldehyd, mit einer Amino-, Imino- oder Amidgruppen enthaltenden Komponente erhalten werden. Wirtschaftlich am bedeutendsten sind in diesem Zusammenhang Harnstoff-Formaldehyd Aminoplastharze sowie Melamin-Formaldehyd Aminoplastharze.

Bei den in der holzverarbeitenden Industrie als Imprägnierharz oder Flüssig Overlay verwendeten Aminoplastharzen handelt es sich häufig um Aminoplast-Vorkondensate, deren Methylolgruppen unverethert oder mit Alkoholen teilweise verethert sind. Sie werden in der Regel im wäßrigen Medium hergestellt und auch in wäßriger Form verarbeitet bzw. in den Handel gebracht. Aminoplastharze dienen häufig als Imprägnierharze zum Tränken von Papierbahnen, insbesondere von Overlay- oder Dekorpapieren, die dann zur Herstellung von Laminaten, dekorativ beschichteten Spanplatten, Schichtpresstoffen oder Kompaktplatten eingesetzt werden. Dazu werden die Papierbahnen mit Tränkharzen imprägniert, welche gegebenenfalls mit einem Härter und/oder anderen Additiven versetzt wurden. Die imprägnierten Papierbahnen werden anschließend auf Holzwerkstoffe (wie beispielsweise MDF-, HDF- oder Spanplatten) aufgepresst oder mit einem Stapel weiterer beharzter Papiere zu einem Schichtstoff oder einer Kompaktplatte verpresst.

Aminoplastharze können jedoch auch direkt zur Oberflächenbeschichtung von Holzwerkstoffen verwendet werden.

Um die Kratz- und Abriebfestigkeit von Laminat und Holzwerkstoffen zu erhöhen, ist es bekannt, die Dekor- und/oder Overlaypapiere bzw. die Oberfläche des Holzwerkstoffs noch mit einem transparenten, sogenannten Overlayfilm, zu beschichten. Eine branchenübliche Bezeichnung für diese Art des Auftrags ist Flüssig-Overlay. Für diesen Overlayfilm werden in der Praxis ebenfalls Aminoplastharze verwendet.

Derart hergestellte Laminate, welche mindestens eine Schicht Aminoplastharz enthalten (beispielsweise als Tränkharz oder in Form eines Overlay-Films), werden vornehmlich als Fußbodenbelag, zum Innenausbau oder zur Herstellung von Möbeln verwendet.

Insbesondere für die Verwendung dieser Laminate als Fußbodenbelag, aber auch für die Möbelherstellung, sind Eigenschaften wie Abriebfestigkeit, Kratzfestigkeit und/oder Abnutzungsbeständigkeit von entscheidender Bedeutung.

Aus dem Stand der Technik sind unterschiedliche Verfahren zur Erhöhung der Abriebfestigkeit, Kratzfestigkeit und Abnutzungsbeständigkeit von dekorativen Schichtstoffen, insbesondere Laminaten, bekannt. In der Praxis werden dem für die Imprägnierung oder den Flüssig Overlay verwendeten Aminoplastharz zu diesem Zweck häufig feinteilige Hartpartikel, beispielsweise aus Korund (Al₂O₃), zugemischt.

Die EP 1 584 666 A1 beschreibt beispielsweise die Zugabe von besonders feinteiligen Füllstoffen zu Aminoplastharzen, mit denen Papiere bei der Laminatherstellung imprägniert werden. Laminate, die aus solchen Papieren hergestellt werden, weisen eine verbesserte Kratzfestigkeit auf, wobei es dennoch möglich sein soll, eine glänzende Oberfläche zu erzielen.

Die Zumischung von Korund oder anderen feinteiligen Füllstoffen zum Aminoplastharz führt in der Regel zu einer erhöhten Abriebfestigkeit und Beständigkeit der Laminate gegenüber großen tiefen Kratzern.

Allerdings vermögen die aus dem Stand der Technik bekannten Verfahren es nicht, eine zufriedenstellende Verbesserung der Scheuer- oder Mikrokratzbeständigkeit zu gewährleisten. Mit den in den letzten Jahren gestiegenen Anforderungen an das Design und die Ästhetik von Laminatfußböden, spielt die Scheuer- oder Mikrokratzbeständigkeit eine immer größere Rolle. Insbesondere hinsichtlich des Glanzgrades ist gewünscht, dass Fußböden eine erhöhte Scheuer- oder Mikrokratzbeständigkeit aufweisen sollen. Hierdurch werden feinste Kratzer auf der Oberfläche vermieden, die nicht nur während der Fertigung, des Transports und des Einbaus auftreten können, sondern typischerweise auch in Form von Nutzungsspuren und Glanzgradveränderungen auf stark belaufenen Fußbodenbereichen negativ auffallen.

Die WO 2009/133144 A1 schlägt zur Verbesserung der Mikrokratzfestigkeit ein Aminoplastharz vor, das als Tränkharz oder Flüssig-Overlay in der Laminatherstellung verwendet wird und oberflächenmodifizierte SiO₂-Nanopartikel (Silika-Nanopartikel) enthält. Dieses Aminoplastharz kann zum Einen erhalten werden, indem eine Dispersion aus fertigen Silika-Nanopartikel und fertigem Aminoplastharz hergestellt wird. Alternativ können die fertigen Silika-Nanopartikel auch bereits während der Synthese des Aminoplastharzes hinzugegeben werden oder aber auf das bereits mit dem Aminoplastharz imprägnierte Papier aufgesprüht werden. Die verwendeten Silika-Nanopartikel weisen einen mittleren Partikeldurchmesser von bevorzugt etwa 5 bis 60 nm auf.

Nachteilig an der in der WO 2009/133144 A1 beschriebenen Vorgehensweise ist, dass fertige Nanopartikel eingesetzt werden müssen. Diese müssen zum Einen aufwändig hergestellt, getrocknet und ausgemessen oder aber eingekauft werden. Darüber hinaus besteht jedoch auch die Befürchtung, dass Nanopartikel möglicherweise gesundheitsschädlich sein könnten. Die mögliche Inhalation von Nanopartikel während der Fertigung der modifizierten Aminoplastharze durch das Bedienpersonal könnte ein Gesundheitsrisiko darstellen. Zumindest ist dieses Risiko mangels verfügbarer Langzeitstudien derzeit schwer abschätzbar.

Ein weiterer Nachteil der oben beschriebenen, aus dem Stand der Technik bekannten Verfahren ist, dass bei Zugabe von fertigen partikulären Füllstoffen oft keine gleichmäßige homogene Verteilung der Partikel in der Harzmatrix und über die gesamte Fläche des imprägnierten Papiers erzielt werden kann. In der Praxis kann es ferner, je nach Zusammensetzung des Aminoplastharzes und Art der verwendeten Nanopartikel, auch zu einer schlechten Verträglichkeit kommen, was sich unter anderem in einer unvollständigen Dispergierbarkeit bemerkbar machen kann.

Ausgehend von dem voranstehend erläuterten Stand der Technik bestand eine Aufgabe der Erfindung darin, ein kostengünstiges Verfahren zur Herstellung eines Laminats, bereitzustellen, mit dem es auf einfache und wirtschaftlich effektive Weise möglich ist, die Scheuer- und/oder Mikrokratzbeständigkeit der Oberflächen zu erhöhen, ohne dabei freie Nanopartikel einsetzen zu müssen.

Eine weitere Aufgabe der Erfindung bestand darin, ein Aminoplastharz bereitzustellen, das eine gegenüber dem Stand der Technik verbesserte Stabilität gegenüber äußeren Einflüssen, insbesondere eine höhere Mikrokratzfestigkeit, aufweist, jedoch gleichzeitig die üblichen Qualitätsmerkmale von derartigen Aminoplastharzen beibehält, wie beispielsweise eine möglichst vollständige Transparenz und/oder die Erhaltung des hohen Glanzes des Laminats nach Aufbringung des Aminoplastharzes.

Diese Aufgaben werden erfindungsgemäß durch das in Anspruch 1 angegebene Laminat, die in den Ansprüchen 17 und 18 angegebenen Verwendungen, das in Anspruch 20 angegebene Verfahren sowie das in Anspruch 22 genannte Aminoplastharz gelöst.

Vorteilhafte Ausgestaltungen der Erfindung sind in den abhängigen Ansprüchen angegeben und werden nachfolgend wie der allgemeine Erfindungsgedanke im Einzelnen erläutert.

Das erfindungsgemäße Laminat weist mindestens eine Schicht auf, die das erfindungsgemäße Aminoplastharz enthält bzw. aus diesem besteht. Das erfindungsgemäße Aminoplastharz ist ein Kondensationsprodukt, das erhältlich ist durch Umsetzen einer Reaktionsmischung, welche (1) Formaldehyd, (2) eine Amino-, Imino- oder Amidgruppen enthaltende Komponente und (3) mindestens ein Alkoxysilan, Organoalkoxysilan oder Metallalkoxid umfasst.

Die Formaldehyd und Amino-, Imino- oder Amidgruppen enthaltenden Komponenten stellen dabei die üblichen Ausgangsstoffe zur Herstellung eines Aminoplastharzes dar. Überraschend wurde festgestellt, dass es möglich ist, Alkoxysilane, Organoalkoxysilane oder Metallalkoxide, welche übliche Nanopartikel-Vorläufersubstanzen darstellen, direkt in die Reaktionsmischung zur Herstellung eines Aminoplastharzes einzubringen und zur Reaktion zu bringen. Ohne an wissenschaftliche Theorie gebunden sein zu wollen, kommt es hierbei vermutlich zu einer Co-Kondensation der Nanopartikel-Vorläufersubstanzen mit der sich bildenden Aminoplastmatrix und zumindest teilweise auch zu einer *in situ* Bildung von Nanopartikeln oder anderweitiger Strukturen in dem Reaktionsansatz.

Laminate, welche mindestens eine Schicht aufweisen, welche dieses erfindungsgemäße Aminoplastharz enthält, zeigten in praktischen Versuchen eine erhöhte Mikrokratz- und Scheuerbeständigkeit. Diese wurde mittels eines modifizierten Martindale Tests, einem genormtem Prüfverfahren zur Bestimmung der Mikrokratzbeständigkeit bei Laminatböden (DIN EN ISO 12947:04/1999 bzw. IHD W-445, Version Mai 2007), bestimmt.

Die erhöhte Mikrokratzbeständigkeit ist vermutlich darauf zurückzuführen, dass sich aus dem mindestens einen Alkoxysilan, Organoalkoxysilan oder Metallalkoxid fein verteilte, nanoskalige Strukturen bilden, die kovalent mit der Aminoplastharz-matrix vernetzt sind und somit deren Härte erhöhen. Dadurch, dass erfindungsgemäß die Nanopartikel-Vorläufersubstanzen direkt dem Aminoplastharz-Kondensationsansatz zugegeben werden und zusammen mit diesem umgesetzt werden, kommt es zu einer besonders homogenen Verteilung der anorganischen Bestandteile in der Aminoplastharzmatrix. Wegen der ausgeprägten kovalenten Vernetzung zeigen die erfindungsgemäßen Aminoplastharze ferner eine verbesserte Verträglichkeit der anorganischen Komponente mit der Aminoplastharzmatrix im Vergleich zu der aus dem Stand der Technik bekannten Verwendung fertiger Silika-Nanopartikeln als Zuschlagstoffe für Aminoplastharze.

Wenn hier von Laminat die Rede ist, so ist damit ein Erzeugnis gemeint, das mindestens zwei flächig miteinander verbundene Schichten umfasst. Diese Schichten können aus gleichen oder unterschiedlichen Materialien bestehen. Mindestens eine dieser beiden Schichten enthält das erfindungsgemäße Aminoplastharz. Vorzugsweise enthält mindestens eine Schicht des erfindungsgemäßen Laminats Holz, Lignozellulose, Papier, Flies, Faserstoffe, Textil oder Gewirke oder Kombinationen hiervon.

Die zumindest zwei Schichten werden durch Verpressen unter erhöhtem Druck und erhöhter Temperatur verbunden. Dabei wird das Aminoplastharz kurzzeitig flüssig und reagiert sodann im Wege einer Polykondensation zum fertigen und dauerhaft mit der weiteren Schicht verbundenen Laminat.

Gemäß einer Ausführungsform der Erfindung umfasst das Laminat mindestens zwei Schichten, wobei die erste Schicht Lignozellulose, Holz und/oder einen Holzwerkstoff enthält und die zweite Schicht das erfindungsgemäße Aminoplastharz enthält oder daraus besteht. Die zweite Schicht kann auch als Imprägnat ausgebildet sein, also das erfindungsgemäße Aminoplastharz auch in Form eines damit getränkten Papiers, Flies, Faserstoffes, Textils oder Gewirkes enthalten.

Vor dem Verpressen wird die entweder direkt aufgebrachte Schicht Aminplastharz oder das Imprägnat auf eine bestimmte Restfeuchte, bevorzugt auf 2 bis 8 %, besonders bevorzugt auf 4 bis 6 % getrocknet.

Gemäß einer anderen Ausführungsform der Erfindung ist das Laminat ein Schichtstoff, der mehrere, mit Aminoplastharz getränkte Papierschichten, enthält, die unter Hochdruck zusammengefügt wurden. Ein Schichtstoff mit einer Dicke von 2 mm oder mehr ist eine sogenannte Kompaktplatte. Erfindungsgemäß ist mindestens eine Papierschicht des Schichtstoffs oder der Kompaktplatte, vorzugsweise die letzte oder vorletzte Papierschicht, mit dem erfindungsgemäßen Aminoplastharz getränkt. Alternativ oder zusätzlich kann der Schichtstoff auch eine separat aufgetragene Außenschicht aufweisen (sogenannte Overlay- oder Finish-Schicht), welche das erfindungsgemäße Aminoplastharz enthält. Zu den Schichstoffen im Sinne dieser Erfindung zählen neben den Kompaktplatten insbesondere auch HPL ("High Pressure Laminate") und CPL ("Continuous Pressing Laminates") Schichtstoffe.

Schichtstoffe, insbesondere Kompaktplatten, welche den erfindungsgemäßen Aminoplastharz enthalten, eignen sich besonders gut zur Fassadenverkleidung. So scheint sich das erfindungsgemäße Aminoplastharz günstig auf die Witterungsbeständigkeit der Kompaktplatten auszuwirken. Gemäß einer Ausführungsform wird dem erfindungsgemäßen Aminoplastharz ein Metalloxid zugefügt. Wird ein solches Aminoplastharz bei der Herstellung einer Kompaktplatte verwendet, zeigt diese eine erhöhte UV-Absorption im Vergleich zu den im Stand der Technik üblicherweise verwendeten Kompaktplatten.

Gemäß einer weiteren Ausführungsform sind die Laminate, die das erfindungsgemäße Aminoplastharz enthalten, antibakteriell wirksam. Vorzugsweise wird dazu dem erfindungsgemäßen Aminoplastharz ein Metalloxid beigegeben, bzw. enthält das erfindungsgemäße Aminoplastharz ein Metalloxid, insbesondere MoO3 oder WoO3. Die dadurch erzielte antibakterielle Wirkung erklärt sich vermutlich dadurch, dass sich in Anwesenheit eines wässrigen Mediums H+ Ionen bilden, wodurch das wässrige Medium einen sauren pH-Wert annimmt und dadurch antimikrobiell wirkt.

Typische Laminate im Sinne dieser Erfindung sind ferner auch Holzwerkstoffplatten, welche mit einer Schicht erfindungsgemäßem Aminoplastharz beschichtet sind; Holzwerkstoffplatten, welche mit einem mit dem erfindungsgemäßen Aminoplastharz getränkten Dekorpapier beschichtet sind sowie Schichtpressstoffe oder Kompaktplatten, welche mit dem erfindungsgemäßen Aminoplastharz beharzte Papiere enthalten.

Zu den Laminaten im Sinne dieser Erfindung zählen auch Imprägnate. Imprägnate weisen mindestens eine Schicht auf, welche Papier, Flies, Faserstoff, Textil oder Gewirke enthält, die mit dem erfindungsgemäßen Aminoplastharz beschichtet und/oder imprägniert wurde bevor sie unter Druck und Temperatur zum fertigen Laminat verpresst wurde.

Die Nanopartikelvorläufersubstanzen, welche zur Herstellung des erfindungsgemäßen Aminoplastharzes in einer Reaktionsmischung mit Formaldehyd und der Amino-, Imino- oder Amidgruppen enthaltenden Komponente umgesetzt werden, sind ausgewählt aus der Gruppe bestehend aus Alkoxysilanen, Organoalkoxysilanen und Metallalkoxiden. Derartige Verbindungen sind dem Fachmann als Vorläufersubstanzen (Prekursoren) in der Nanopartikelgewinnung mittels des sogenannten Sol-Gel-Prozesses bekannt. Eine Zusammenfassung des Sol-Gel-Prozess mit Angabe geeigneter Prekursoren und weitere Literaturstellen findet sich beispielsweise in dem Übersichtsartikel von Prof. H. K. Schmidt in "Chemie in unserer Zeit", 2001, Heft Nr. 3, S. 176 bis 184.

Gemäß einer bevorzugten Ausführungsform wird als Alkoxysilan eine Verbindung der Formel Si(OR)4, als Organoalkoxysilan eine Verbindung der Formel R'xSi(OR)4-x und/oder als Metallalkoxid eine Verbindung der Formel Me(OR)4 eingesetzt. Dabei bedeutet
- R jeweils wahlweise substituiertes Alkyl oder Aryl und insbesondere bevorzugt Methyl, Ethyl, Butyl oder Propyl;
- R' jeweils Halogen, insbesondere Chlor; wahlweise substituiertes Alkyl, insbesondere Methyl, Ethyl, Butyl oder Propyl; oder wahlweise substituiertes Aryl;
- x eine Zahl zwischen 1 und 4; und
- Me ein Metall, Halbmetall oder Übergangsmetall, insbesondere bevorzugt Al, Ti oder Zr.

Bevorzugt werden für das erfindungsgemäßen Aminoplastharz organisch modifizierte Silane, d.h. Alkoxysilane und/oder Organoalkoxysilane eingesetzt.

Als für viele Anwendungszwecke besonders geeignet hat sich ein Alkoxysilan bzw. Organoalkoxysilan herausgestellt, das ausgewählt ist aus der Gruppe bestehend aus Tetramethoxysilan, Tetraethoxysilan, Tetrapropoxysilan, Methylglykolorthosilicat, Ethylglykolorthosilicat, Methyltrimethoxysilan, Methyltriethoxysilan, Dimethyldimethoxysilan, Dimethyldiethoxysilan, Ethyltrimethoxysilan, Ethyltriethoxysilan, Trimethylethoxysilan, 2-Chlorethyltriethoxysilan, Vinyltrimethoxysilan, Vinyltriethoxysilan, Vinylmethyldiethoxysilan, Vinyltris(2-methyloxyethoxy)silan, Phenyltrimethoxysilan, 2-Phenylethyltrimethoxysilan, Diphenyldimethoxysilan, Propyltrimethoxysilan, Propyltriethoxysilan, 3-Chlorpropyltrimethoxysilan, 3-Chlorpropyltriethoxysilan, Propylmethyldimethoxysilan, Propylmethyldiethoxysilan, 3-Chlorpropylmethyldimethoxysilan, 3-Chlorpropylmethyldiethoxysilan, Isobutyltrimethoxysilan, Isobutyltriethoxysilan, Amyltrimethoxysilan, Amyltriethoxysilan, Octyltrimethoxysilan, Octyltriethoxysilan, Cyclohexyltrimethoxysilan, Cyclohexylmethyldimethoxysilan, Hexadecyltrimethoxysilan und Hexadecyltriethoxysilan und Kombinationen hiervon.

Optimale Ergebnisse stellen sich ein, wenn als Alkoxysilan Tetramethoxysilan, Tetraethoxysilan und/oder Tetrapropoxysilan verwendet wurde.

Die erfindungsgemäße Lehre kann nach einer weiteren erfindungsgemäßen Ausführungsform auch dadurch verwirklicht werden, dass das Alkoxysilan bzw. das Organoalkoxysilan mit reaktiven Gruppen, die zur Vernetzung mit der Aminoplastmatrix geeignet sind, funktionalisiert ist.

Diese reaktiven Gruppen sind vorzugsweise ausgewählt aus Epoxid, Methacryl, Glycidoxy, Glycidoxypropyl, Amin, Hydroxy, Carboxy und Vinyl oder Mischungen hiervon.

Praktische Versuche haben gezeigt, dass besonders gute Ergebnisse hinsichtlich der Mikrokratzbeständigkeit erzielt werden können, wenn die Reaktionsmischung als Co-Solvens für das Alkoxysilan, Organoalkoxysilan oder Metallalkoxid ein organisches Lösungsmittel, insbesondere Glyzerin, Glykole, Glykolether (sogenannte und unter dieser Bezeichnung verfügbare Dowanole), Ethanol oder DMSO, oder Mischungen daraus enthält.

Erfindungsgemäß wird die Hydrolyse und Kondensation der Nanopartikelvorläufersubstanzen, d.h. des Alkoxysilans, Organoalkoxysilans oder Metallalkoxids, während der Aminoplast-Kondensation, d.h. *in situ,* durchgeführt. Das für die Hydrolyse erforderliche Wasser ist entweder schon in der Reaktionsmischung vorhanden oder kann zugesetzt werden. Wasser und/oder Alkohol, die bei der Hydrolyse und Kondensation entstehen, können beispielsweise mittels Vakuum während oder nach der Reaktion wieder entfernt werden.

Im Gegensatz zu den aus dem Stand der Technik bekannten Nanopartikel enthaltenden Aminoplastharzen wird erfindungsgemäß nicht so vorgegangen, dass zunächst Nanopartikel z.B. mittels eines Sol-Gel-Prozesses hergestellt und getrocknet werden, um anschließend in ein Aminoplastharz eingebracht zu werden. Vielmehr wird erfindungsgemäß eine Art Sol-Gel-Prozess gleichzeitig mit der Aminoplast-Kondensation, d.h. *in situ,* durchgeführt, wodurch ein neuartiges, anorganische Nanostrukturen enthaltendes Aminoplastharz erhältlich ist.

Das erfindungsgemäße Verfahren bietet gegenüber dem Stand der Technik insbesondere den Vorteil, dass kein Nanopartikelenthaltendes Pulver mehr in das fertige Aminoplastharz eingebracht werden muss und somit auf einen Dispergierprozeß verzichtet werden kann.

Als Amino-, Imino- oder Amidgruppen enthaltende Komponente können prinzipiell alle derartigen schon aus der Aminoplastherstellung bekannten Verbindungen gewählt werden. Gemäß einer besonderen Ausführungsform der Erfindung ist die Amino-, Imino- oder Amidgruppen enthaltende Komponente ausgewählt aus Harnstoff, Melamin, Thioharnstoff, Cyanamid, Dicyandiamid und Diaminohexan oder Mischungen hiervon. Optimale Ergebnisse stellen sich ein, wenn als Amino-, Imino- oder Amidgruppen enthaltende Komponente Harnstoff und/oder Melamin eingesetzt wird.

Das erfindungsgemäße Aminoplastharz kann neben den oben genannten Komponenten auch noch weitere Additive, wie beispielsweise Netzmittel, Härter oder Trennmittel etc. enthalten. In einer Ausführungsform kann das Aminoplastharz auch durch Alkohole, insbesondere C1 bis C4 Alkohole wie Methanol, Glycol und/oder Butanol, vollständig oder teilweise verethert sein.

Hinsichtlich der Zusammensetzung der Reaktionsmischung hat es sich als besonders praxisgerecht erwiesen, wenn die Reaktionsmischung, bezogen auf deren Gesamtgewicht, Formaldehyd in einer Menge von 10 bis 20 Gew.-%, bevorzugt 12 bis 16 Gew.-%, die Amino-, Imino- oder Amidgruppen enthaltende Komponente in einer Menge von 25 bis 45 Gew.-%, bevorzugt 30 bis 40 Gew.-%, und das Alkoxysilan, Organoalkoxysilan oder Metallalkoxid in einer Menge von 2 bis 25 Gew.-%, bevorzugt 5 bis 15 Gew.-% enthält.

Bei dem erfindungsgemäßen Verfahren zur Herstellung des Aminoplastharzes kann das Alkoxysilan, Organoalkoxysilan oder Metallalkoxid prinzipiell in jeder Stufe der Aminoplast-Kondensation zugegeben werden. Das Alkoxysilan, Organoalkoxysilan oder Metallalkoxid kann insbesondere auch vor Beginn der Aminoplast-Kondensation in den ursprünglichen Reaktionsansatz hinzugegeben werden.

Praktische Versuche haben jedoch gezeigt, dass es von Vorteil ist, die Reaktionskomponenten sukzessive miteinander umzusetzen. Dies geschieht am besten derart, dass zunächst die Formaldehyd und die Amino-, Imino- oder Amidgruppen enthaltende Komponente miteinander zu einem gewissen Grad vorkondensiert werden und erst anschließend mit dem Alkoxysilan, Organoalkoxysilan oder Metallalkoxid umgesetzt werden.

Beispielsweise können zunächst - wie in der aus dem Stand der Technik bekannten Aminoplast-Imprägnierharzherstellung üblich - die Formaldehyd und die Amino-, Imino- oder Amidgruppen enthaltende Komponente sowie gegebenenfalls weitere Additive, insbesondere Lösungsvermittler wie Alkohole, Zucker, Glykole und Derivate hiervon, Propylenglycol (PPG), Glycerin oder Dimethylsulfoxid (DMSO), bis zum Klarwerden der Lösung bei erhöhten Temperaturen miteinander umgesetzt werden, bevor das mindestens eine Alkoxysilan, Organoalkoxysilan oder Metallalkoxid hinzugegeben wird und die Umsetzung der Reaktionsmischung fortgeführt wird.

Gemäß einer besonderen Ausführungsform der Erfindung sind die in der Reaktionsmischung enthaltenen Komponenten Formaldehyd und die Amino-, Imino- oder Amidgruppen enthaltende Komponente schon zu einem Grad von mindestens 20, bevorzugt mindestens 50 % vorkondensiert bevor das mindestens eine Alkoxysilan, Organoalkoxysilan oder Metallalkoxid zur Reaktionsmischung hinzugefügt wird.

Der Grad der Vorkondensation kann durch Trübungspunktmessungen wie folgt festgestellt werden. Im Laufe der Kondensation des Aminoplastharzes nimmt die Wasserverdünnbarkeit, die zu Beginn der Kondensation infinit ist, aufgrund des steigenden Molekulargewichtes stetig ab. Diesen Umstand macht man sich zunutze indem man indirekt den Kondensationsgrad des Harzes mittels Wasserverträglichkeitsmessungen bzw. Trübungspunktmessungen bestimmt.

Für eine Trübungspunktmessung [TP(1+6)] wird einer definierten Probenmenge Aminoplastharz der 6-fache Volumenteil destillierten warmen Wassers (60°C) zugesetzt. Die Mischung wird hierauf langsam abgekühlt. Jener Punkt an dem die erste Trübung der Probemischung einsetzt, wird als Trübungspunkt der betreffenden Probe erfaßt.

Fertigkondensierte Aminoplastharze haben am Ende der Kondensationsphase üblicherweise Trübungspunkte von etwa 40 - etwa 60 °C.

Gemäß einer bevorzugten Ausführungsform werden die in der Reaktionsmischung enthaltenen Komponenten Formaldehyd und die Amino-, Imino- oder Amidgruppen enthaltende Komponente schon zu einem Trübungspunkt [TP(1+6)] von 20 - 50°C vorkondensiert bevor das mindestens eine Alkoxysilan, Organoalkoxysilan oder Metallalkoxid zur Reaktionsmischung hinzugefügt wird.

Gemäß einer weiteren, bevorzugten Ausführungsform findet die Vorkondensation bei einer höheren Temperatur statt als die anschließende Umsetzung mit dem Alkoxysilan, Organoalkoxysilan oder Metallalkoxid. Optimale Ergebnisse stellen sich ein, wenn die Vorkondensation bei etwa 120 bis 80°C durchgeführt wird und die anschließende Umsetzung mit dem Alkoxysilan, Organoalkoxysilan oder Metallalkoxid bei etwa 50 bis 80°C.

Die Umsetzung der Reaktionsmischung nach Zugabe des mindestens einen Alkoxysilans, Organoalkoxysilans oder Metallalkoxids wird vorzugsweise so lange fortgeführt bis mindestens 50 mol-% des mindestens einen Alkoxysilans, Organoalkoxysilans oder Metallalkoxids in Anwesenheit von Formaldyd und der Amino-, Imino- oder Amidgruppen enthaltenden Komponente hydrolysiert und/oder kondensiert ist. Die Umsetzung kann dabei etwa durch den parallel ablaufenden pH Abfall der Reaktionsmischung verfolgt werden.

Der pH Abfall kann, insbesondere bei hohen Alkoxysilan-, Organoalkoxysilan- oder Metallalkoxidgehalten, bis zu einer pH Einheit betragen. Da das Aminoplastharz in dieser Kondensationsphase der Rezeptur keine besonderen Verschiebungen des pH Wertes mehr verursacht, können Änderungen der pH Werte als direkte Indikation für die Umsetzung des Alkoxysilans, Organoalkoxysilans oder Metallalkoxids angesehen werden. Typischerweise ist daher bereits eine pH Absenkung von 0,2 - 0,6 pH Einheiten ein Indiz für eine deutliche Umsetzungsreaktion der genannten Precursoren.

Praktische Versuche haben gezeigt, dass der pH der Reaktionsmischung bei der Herstellung des erfindungsgemäßen Aminoplastharzes eine wichtige Rolle spielt. Gemäß einer bevorzugten Ausführungsform der Erfindung erfolgt das Umsetzen der Reaktionsmischung bei einem pH von mindestens 8, 0, vorzugsweise mindestens 9,0 und insbesondere bevorzugt bei einem pH von 9, 0 bis 11,0. Bei Einhaltung dieser pH-Werte während der Umsetzung der Reaktionsmischung, die Formaldehyd, eine Amino-, Imino- oder Amidgruppen enthaltende Komponente und mindestens ein Alkoxysilan, Organoalkoxysilan oder Metallalkoxid umfasst, lassen sich Aminoplastharze mit besonders guten Eigenschaften hinsichtlich der Mikrokratzbeständigkeit herstellen.

Die beim Umsetzen der Reaktionsmischung einzustellende Temperatur hängt von den eingesetzten Komponenten ab. Grundsätzlich lassen sich zufriedenstellende Ergebnisse erzielen, wenn das Umsetzen der Reaktionsmischung in einem Temperaturbereich von 20°C bis 90°C, vorzugsweise von 40°C bis 85°C und besonders bevorzugt von 60°C bis 80°C erfolgt. Erfindungsgemäß wird das derart erhältliche Aminoplastharz zur Oberflächenbehandlung von Holzwerkstoffen oder als Imprägnierharz und/oder Flüssigoverlay bei der Laminatherstellung eingesetzt.

Dementsprechend stellt die Erfindung auch ein Laminat bereit, das mindestens eine Schicht aufweist, welches das erfindungsgemäße Aminoplastharz enthält oder daraus besteht.

Diese Schicht kann entweder separat aufgetragen worden sein, z.B. als Flüssig-Overlay. Es kann sich dabei aber auch um ein mit dem Aminoplastharz imprägniertes Papier handeln. Weist der Holzwerkstoff eine Papierschicht, wie insbesondere ein Dekorpapier oder Overlaypapier, auf, so kann die Schicht Aminoplastharz auf diese Papierschicht aufgetragen sein und/oder in ihr enthalten sein. Wird die Schicht des erfindungsgemäßen Aminoplastharzes separat aufgetragen, z.B. als Flüssig-Overlay, so kann diese Oberflächenbeschichtung beispielsweise durch Walzen, Sprühen oder Rakeln, ggf. auch durch Aufstreichen erfolgen.

Die Schichtdicke der fertigen Aminoplastharz Schicht (nach Pressung) beträgt vorzugsweise von 0,5 bis 100 µm, bevorzugt von 10 bis 100µm, besonders bevorzugt von 20 bis 40 µm.

Da die Aminoplastharz enthaltende Schicht für die erhöhte Mikrokratzbeständigkeit des erfindungsgemäßen Holzwerkstoffs verantwortlich ist, werden diesbezüglich besonders gute Ergebnisse erzielt, wenn diese Schicht möglichst nah an der Oberfläche des Holzwerkstoffs angeordnet ist. Gemäß einer bevorzugten Ausführungsform der Erfindung bildet die Aminoplastharz enthaltende Schicht eine Oberfläche des Holzwerkstoffs, d.h. sie befindet sich an einer Oberfläche des Holzwerkstoffs.

Die mit dem erfindungsgemäßen Aminoplastharz versehenen Holzwerkstoffe zeichnen sich durch eine besonders hohe Mikrokratzbeständigkeit aus. Gemäß einer weiteren Ausführungsform der Erfindung weisen die erfindungsgemäßen Holzwerkstoffe eine Verbesserung der Mikrokratzbeständigkeit gemäß Martindale-Test (DIN EN ISO 12947:04/1999 bzw. IHD W-445, Version Mai 2007), bevorzugt eine Verbesserung um mindestens eine Klasse, auf.

Unter dem Begriff "Holzwerkstoff" werden erfindungsgemäß beliebige, insbesondere plattenförmige Werkstoffe verstanden, die Lignozellulose, bevorzugt Holz, oder Späne, Fasern oder Strands aus Holz enthalten. Beispiele für Holzwerkstoffe im Sinne der Erfindung sind Holzplatten oder Holzformteile, wobei diese sowohl Verbundwerkstoffe aus einzelnen Holzpartikeln als auch Werkstoffe aus Massivholz sein können. Holzwerkstoffe im Sinne dieser Erfindung sind insbesondere solche auf Vollholzbasis, Furnierwerkstoffe, Spanwerkstoffe, Faserwerkstoffe oder andere Verbundwerkstoffe. Erfindungsgemäß weist der Holzwerkstoff bevorzugt eine MDF-, HDF-, OSB, Span- oder Vollholzplatte auf oder besteht aus dieser.

Gemäß einer besonders bevorzugten Ausführungsform enthält das erfindungsgemäße Laminat einen Holzwerkstoff. In einer Variante weist ein solches Laminat mindestens zwei übereinander angeordnete Schichten auf, wobei zumindest eine davon Papier und/oder Lignozellulose, bevorzugt Holz, oder Späne, Fasern oder Strands aus Holz enthält. Die untere und/oder Trägerschicht ist bevorzugt eine Holzwerkstoffplatte, wie z.B. eine MDF-, HDF-, Span-, OSB- oder auch Vollholzplatte. Gemäß einer Ausführungsform kann die obere Schicht eine Schicht des erfindungsgemäßen Aminoplastharzes sein. Die obere Schicht kann beispielsweise ein Dekor- oder ein Overlaypapier sein. Diese Papiere sind dem Fachmann aus der Laminatproduktion bekannt. Sie sind insbesondere derart ausgestaltet, dass sie gut mit einem Aminoplastharz imprägniert bzw. getränkt werden können. In dem erfindungsgemäßen Laminat kann die Schicht erfindungsgemäßes Aminoplastharz entweder durch Tränkung des die obere Schicht des Laminats bildenden Papiers hergestellt werden oder die Schicht Aminoplastharz kann separat auf oder unter die obere Schicht des Laminats aufgetragen werden. Das erfindungsgemäße Aminoplastharz kann jedoch auch selbst die obere Schicht des Laminats bilden. Ebenso ist die Herstellung eines dünnen besonders mikrokratzerbeständigen Overlaypapieres mithilfe des erfindungsgemäßen Amminoplastharzes möglich.

Die erfindungsgemäßen Holzwerkstoffe eignen sich auf Grund ihrer erhöhten Mikrokratzbeständigkeit besonders zur Verwendung als Fußbodenbelag, Arbeitsplatte, Tischplatte oder zur Möbelherstellung.

Das Prinzip der Erfindung soll im Folgenden an Hand eines Ausführungsbeispiels näher erläutert werden.

### Beispiel 1

In einem 1000 ml Rundkolben wurde 300 g Formalin, 115 g Wasser und 20 g Glykol vorgelegt und die Reaktionsmischung auf 45 °C erhitzt. Nach Einstellen der Mischung auf pH 9,4 wurde 285 g Melamin hinzugegeben und die Mischung auf 100°C erhitzt. Die Umsetzung der Reaktionsmischung erfolgte zunächst nur bis zum Klarwerden der Mischung. Die Kondensation wurde durch Abkühlen auf 60°C verlangsamt und nach Einstellen der Mischung auf pH 10,0 wurde 110 g Tetraethoxysilan (TEOS) hinzugegeben. Die derart erhaltene Reaktionsmischung wurde so lange bei 60°C gehalten, bis das TEOS umgesetzt war. Anschließend wurde das während der Reaktion entstandene Wasser und der Alkohol mittels Vakuum entfernt (60°C, 150 mbar). Der pH wurde auf 9,5 eingestellt und das Aminoplastharz auf 28°C abgekühlt. Es wurde eine klare und stabile Lösung Aminoplastharz erhalten.

### Beispiel 2

Ein Dekorpapier (80 g/m²; Firma Technocell) wurde mit dem Aminoplastharz aus Beispiel 1 imprägniert, so dass nach dem Trocknen auf eine Restfeuchte von 5,5 % ein Gesamtharzauftrag von 110% (atro = "absolut trocken"; dies entspricht dem Zustand des Imprägnats nach Trocknung bei 160 °C über eine Dauer von 5 Minuten) bezogen auf das Gewicht des unbehandelten Dekorpapiers erzielt wurde. Dabei wurde das Papier in einer ersten Tränkwanne zu 84% mit dem Aminoplastharz imprägniert und nach einer ersten Zwischentrockung in einem sogenannten Rasterwerk mit den weiteren 26% der Harzlösung als beidseitigem Harzstrich, jeweils wieder bezogen auf das unbehandelte Dekorpapier, versehen. Der Aminoplastharzflotte wurde dabei kurz vor der Imprägnierung des Dekorpapiers, 0,4 % Netzmittel (Kauropal; BASF), 0,35 % Härter (MH 836; BASF) und 14% Wasser zugegeben.

Das imprägnierte Dekorpapier wurde auf eine Restfeuchte von 5,5 % getrocknet. Anschließend wurde das imprägnierte Dekorpapier zusammen mit drei Lagen eines phenolharzimprägnierten Kraftpapiers sowie einem Gegenzug mit einem Druck von 400 N/cm² bei 175°C für zwei Minuten verpresst und anschließend auf 80 °C rückgekühlt.

### Beispiel 3

Ein Dekorpapier (80 g/m²; Firma Technocell) wurde mit dem Aminoplastharz aus Beispiel 1 imprägniert, so dass ein Gesamtharzauftrag von 90% (atro) bezogen auf das Gewicht des unbehandelten Dekorpapiers erzielt wurde. Dabei wurde das Papier in einer ersten Tränkwanne zu 68% mit dem Aminoplastharz imprägniert und nach einer ersten Zwischentrockung in einem sogenannten Rasterwerk mit weiteren 22% der Harzlösung als beidseitigem Harzstrich versehen. Der Aminoplastharzflotte wurde dabei kurz vor der Imprägnierung des Dekorpapiers, 0,4 % Netzmittel (Kauropal; BASF), 0,35 % Härter (MH 836; BASF) und 14% Wasser zugegeben.

Das imprägnierte Dekorpapier wurde auf eine Restfeuchte von 5,5 % getrocknet. Anschließend wurde das imprägnierte Dekorpapier und ein Gegenzugpapier bei einem Druck von 350 N/cm² und einer Temperatur von 175°C für 30 Sekunden mit einer 18 mm dicken Spanplatte verpresst.

### Beispiel 4

Ein Dekorpapier (65 g/m²; Technocell) wurde mit einem Standard-Melamin-Formaldehyd-Harz imprägniert. Das imprägnierte Dekorpapier wurde auf eine Restfeuchte von 5,5 % getrocknet und wies sodann einen Harzgehalt (atro) von 120 % bezogen auf das unbehandelte Dekorpapier auf.

Das getrocknete imprägnierte Papier wurde mit dem Aminoplastharz aus Beispiel 1 besprüht. Dabei wurde ein Auftrag von 40 g/m² erzielt.

Anschließend wurde das Dekorpapier nochmals auf eine Restfeuchte von 5,5 % getrocknet und analog zu Beispiel 2 verpresst.

### Beispiel 5

Ein Overlaypapier (22 g/m²; Firma Technocell) wurde in der ersten Tränkwanne zu 336 % mit einem Standardaminoplasttränkharz imprägniert und nach einer ersten Zwischentrockung in einem sogenannten Rasterwerk mit dem in Beispiel 1 beschriebenen Aminoplastharz zu 84 % der Harzlösung als beidseitigem Harzstrich versehen, sodaß in Summe ein Harzauftrag von 420 % (atro) bezogen auf das Gewicht des unbehandelten Dekorpapiers erreicht wurde. Unmittelbar nach dem Rasterwerkauftrag des erfindungsgemäßen Aminoplastharzes wurden, vor dem zweiten Tunneltrockner, über einen Streubalken 15 g/m2 Korund einer mittleren Korngröße von 50 my auf die Oberfläche des Overlayimprägnates aufgestreut.

Der erfindungsgemäßen Aminoplastharzflotte wurde dabei kurz vor der Imprägnierung des Dekorpapiers, 0,35 % Netzmittel (Kauropal; BASF), 0,3 % Härter (MH 836; BASF) und 12% Wasser zugegeben.

Das imprägnierte Overlaypapier wurde auf eine Restfeuchte von 5,5 % getrocknet. Anschließend wurde das imprägnierte Overlaypapier zusammen mit einem Standard Dekorpapierimprägnat (siehe Beispiel 1), auf eine 7,6 mm HDF Platte, welche an der Unterseite mit einem Gegenzugimprägnat versehen wurde, mit einem Druck von 350 N/cm² und einer Preßtemperatur von 195°C für 35 Sekunden verpresst.

### Beispiel 6

Alternativ zu Beispiel 1 wurde ein erfindungsgemäßes Aminoplastharz lösungsmittelfrei wie folgt hergestellt. 37,1 Vol. Teile Melaminharz, 1,4 Vol. Teile dH2O und 2,8 Vol. Teile TEOS (Tetraethylorthosilikat)wurden gemischt und 0,1 Vol. Teile 5M NaOH (ggf. auch etwa mehr) zur Anhebung des pH-Werts zugegeben. Die Base wird dabei v.a. zur Titration der sauren SI02-Gruppen benötigt, die durch Hydrolyse im Reaktionsverlauf entstehen. Die Mischung wird im Reaktor bei 70°C unter effizienter Rührung innerhalb von 2 Stunden zur Reaktion gebracht. Zu Beginn ist die Mischung 2-phasig und dadurch trüb. Nach etwas weniger als 2 Stunden zeigt sich die komplette Reaktion durch eine vollständige Klärung der Reaktionslösung zu einem klaren, farblosen und vollständig transparenten Aminoplastharz.

Das derart hergestellte Aminoplastharz zeigte ähnlich gute Eigenschaften in Bezug auf die Verbesserung der Mikrokratzbeständigkeit wie das in Beispiel 1 hergestellte Aminoplastharz (vgl. die untenstehende Bestimmung des Mikrokratzbeständigkeit und Tabelle 1).

### Vergleichsbeispiel 1

Ein Dekorpapier (80 g/m²; Technocell) wurde mit einem Standard-Melamin-Formaldehyd-Harz imprägniert, so dass ein Harzauftrag von 110 % (atro), bezogen auf das unbehandelte Dekorpapier, erzielt wurde. Das imprägnierte Dekorpapier wurde auf eine Restfeuchte von 5,5 % getrocknet.

Anschließend wurde das Dekorpapier analog zu Beispiel 2 verpresst.

### Vergleichsbeispiel 2

Ein Dekorpapier (80 g/m²; Technocell) wurde mit einem Standard-Melamin-Formaldehyd-Harz imprägniert, so dass ein Harzauftrag von 110% (atro), bezogen auf das unbehandelte Dekorpapier, erzielt wurde. Das imprägnierte Dekorpapier wurde auf eine Restfeuchte von 5,5 % getrocknet.

Das getrocknete imprägnierte Papier wurde mit einem Standard-Melamin-Formaldehyd-Harz besprüht, welches handelsübliche Aluminiumoxid Nanopartikel in einer Menge von 5 Gew.-% enthielt. Dabei wurde ein Auftrag von 20 g/m² (atro) erzielt.

Anschließend wurde das Dekorpapier analog zu Beispiel 2 verpresst.

### Bestimmung der Mikrokratzfestigkeit

Die Mikrokratzfestigkeit der erhaltenen Laminate der Beispiele 2 bis 5 sowie der Vergleichsbeispiele 1 und 2 wurde gemäß Martindale Test DIN EN ISO 12947:04/1999 bzw. IHD W-445, Version Mai 2007 getestet. Zu diesem Zweck werden typischerweise Probemuster mit den Ausmaßen 15 x 15 cm aus den Probeplatten geschnitten. Diese werden in die Martindaleapparatur (Rahmen A) eingespannt. Auf die zu prüfende Oberfläche wird ein "ScotchBrite" Schleifschwamm Type (SB 7447; fein; rot), mit einem Gewicht 6N beschwert, auf die Probeoberfläche aufgesetzt und die Apparatur für 5 LB (Lissajous Bewegungen) gestartet. Die Apparatur schwingt in x,y Richtung, sodass der Schleifschwamm auf der Probeoberläche Microkratzer in Form sogenannter Lissajous Figuren erzeugt.

Anschließend wurde die Oberfläche visuell bewertet und die Glanzgradänderung bestimmt.

Die Ergebnisse der Bestimmung der Glanzgradänderung und damit der Microkratzerbeständigkeit der verschiedenen Laminate sind in nachfolgender Tabelle 1 zusammengefasst.

**Tabelle 1 : Bestimmung der Glanzgradänderung der verschiedenen Laminate.**

| Laminat | Papier | Imprägnierung/Auftrag | Einstufung |
|---|---|---|---|
| Beispiel 2 | Dekorp. 80 g/m² | 84% und 26 % gem. Bsp. 1 | 1 |
| Beispiel 3 | Dekorp. 80 g/m² | 68% und 22 % gem. Bsp. 1 | 2 |
| Beispiel 4 | Dekorp. 65 g/m² | 120% Standard und 40 g/m² gem. Bsp. 1 | 1 |
| Beispiel 5 | Overlayp. 22 g/m² | 336% Standard und 84% gem. Bsp. 1 | 1 |
| Vgl.-Bsp. 1 | Dekorp. 80 g/m² | 110% Standard | 4 |
| Vgl.-Bsp. 2 | Dekorp. 80 g/m² | 110% Standard, 20 g/m², 5 Gew.-% Nanopartikel | 2 |

Hierbei bedeutet die Einstufung 1 bis 5:
1: keine sichtbare Veränderung der Oberfläche
2: schwach sichtbare feine Kratzer
3: sichtbare feine Kratzer
4: sichtbare tiefe Kratzer
5: sehr tiefe Kratzer

## Patentansprüche

1. Laminat, welches mindestens eine Schicht aufweist, die ein Aminoplastharz enthält, **dadurch gekennzeichnet, dass** das Aminoplastharz ein Kondensationsprodukt ist, das erhalten wird durch Umsetzen einer Reaktionsmischung bei einem pH von mindestens 8, 0, wobei die Reaktionsmischung, bezogen auf deren Gesamtgewicht,
(1) Formaldehyd in einer Menge von 10 bis 20 Gew.-%,
(2) eine Amino-, Imino- oder Amidgruppen enthaltende Komponente in einer Menge von 25 bis 45 Gew.-%, und
(3) mindestens ein Alkoxysilan, Organoalkoxysilan oder Metallalkoxid in einer Menge von 2 bis 25 Gew.-%, enthält.

2. Laminat nach Anspruch 1, **dadurch gekennzeichnet, dass** das Alkoxysilan eine Verbindung der Formel Si(OR)₄ ist, das Organoalkoxysilan eine Verbindung der Formel R'ₓSi(OR)₄₋ₓ ist und das Metallalkoxid eine Verbindung der Formel Me(OR)₄ ist, wobei
- R jeweils wahlweise substituiertes Alkyl oder Aryl und insbesondere bevorzugt Methyl, Ethyl, Butyl oder Propyl bedeutet;
- R' jeweils Halogen, insbesondere Chlor; wahlweise substituiertes Alkyl, insbesondere Methyl, Ethyl, Butyl oder Propyl; oder wahlweise substituiertes Aryl bedeutet;
- x eine Zahl zwischen 1 und 4 bedeutet; und
- Me ein Metall, Halbmetall oder Übergangsmetall, insbesondere bevorzugt Al, Ti oder Zr bedeutet.

3. Laminat nach Anspruch 1 oder 2, **dadurch gekennzeichnet, dass** das Alkoxysilan bzw. das Organoalkoxysilan ausgewählt ist aus der Gruppe bestehend aus Tetramethoxysilan, Tetraethoxysilan, Tetrapropoxysilan, Methylglykolorthosilicat, Ethylglykolorthosilicat, Methyltrimethoxysilan, Methyltriethoxysilan, Dimethyldimethoxysilan, Dimethyldiethoxysilan, Ethyltrimethoxysilan, Ethyltriethoxysilan, Trimethylethoxysilan, 2-Chlorethyltriethoxysilan, Vinyltrimethoxysilan, Vinyltriethoxysilan, Vinylmethyldiethoxysilan, Vinyltris(2-methyloxyethoxy)silan, Phenyltrimethoxysilan, 2-Phenylethyltrimethoxysilan, Diphenyldimethoxysilan, Propyltrimethoxysilan, Propyltriethoxysilan, 3-Chlorpropyltrimethoxysilan, 3-Chlorpropyltriethoxysilan, Propylmethyldimethoxysilan, Propylmethyldiethoxysilan, 3-Chlorpropylmethyldimethoxysilan, 3-Chlorpropylmethyldiethoxysilan, Isobutyltrimethoxysilan, Isobutyltriethoxysilan, Amyltrimethoxysilan, Amyltriethoxysilan, Octyltrimethoxysilan, Octyltriethoxysilan, Cyclohexyltrimethoxysilan, Cyclohexylmethyldimethoxysilan, Hexadecyltrimethoxysilan und Hexadecyltriethoxysilan und Kombinationen hiervon.

4. Laminat nach einem der voranstehenden Ansprüche, **dadurch gekennzeichnet, dass** das Alkoxysilan bzw. das Organoalkoxysilan mit reaktiven Gruppen, die zur Vernetzung mit dem Aminoplastharz geeignet sind, funktionalisiert ist.

5. Laminat nach Anspruch 4, **dadurch gekennzeichnet, dass** die reaktiven Gruppen ausgewählt sind aus Epoxid, Methacryl, Glycidoxy, Glycidoxypropyl, Amin, Hydroxy, Carboxy und Vinyl oder Mischungen hiervon.

6. Laminat nach einem der voranstehenden Ansprüche, **dadurch gekennzeichnet, dass** die Reaktionsmischung als Co-Solvens für das Alkoxysilan, Organoalkoxysilan oder Metallalkoxid ein organisches Lösungsmittel, insbesondere Dowanol, Ethanol oder DMSO, enthält.

7. Laminat nach einem der voranstehenden Ansprüche, **dadurch gekennzeichnet, dass** die Reaktionsmischung, bezogen auf deren Gesamtgewicht, Formaldehyd in einer Menge von 12 bis 16 Gew.-%, die Amino-, Imino- oder Amidgruppen enthaltende Komponente in einer Menge von 30 bis 40 Gew.- %, und das Alkoxysilan, Organoalkoxysilan oder Metallalkoxid in einer Menge von 5 bis 15 Gew.-%, enthält

8. Laminat nach einem der voranstehenden Ansprüche, **dadurch gekennzeichnet, dass** das die in der Reaktionsmischung enthaltenen Komponenten Formaldehyd und die Amino-, Imino- oder Amidgruppen enthaltende Komponente zu einem Grad von mindestens 20 %, insbesondere mindestens 50 % vorkondensiert sind bevor das mindestens eine Alkoxysilan, Organoalkoxysilan oder Metallalkoxid zur Reaktionsmischung hinzugefügt wird.

9. Laminat nach einem der voranstehenden Ansprüche, **dadurch gekennzeichnet, dass** beim Umsetzen der Reaktionsmischung mindestens 50 mol-% des mindestens einen Alkoxysilans, Organoalkoxysilans oder Metallalkoxids in Anwesenheit von Formaldehyd und der Amino-, Imino- oder Amidgruppen enthaltenden Komponente hydrolysiert und/oder kondensiert werden.

10. Laminat nach einem der voranstehenden Ansprüche, **dadurch gekennzeichnet, dass** das Umsetzen der Reaktionsmischung bei einem pH von mindestens 9, 0 und insbesondere bevorzugt bei einem pH von 9, 0 bis 11,0 erfolgt.

11. Laminat nach einem der voranstehenden Ansprüche, **dadurch gekennzeichnet, dass** das Umsetzen der Reaktionsmischung in einem Temperaturbereich von 20°C bis 90°C, vorzugsweise von 40°C bis 85°C und besonders bevorzugt von 60°C bis 80°C erfolgt.

12. Laminat nach einem der voranstehenden Ansprüche, **dadurch gekennzeichnet, dass** das die Amino-, Imino- oder Amidgruppen enthaltende Komponente ausgewählt ist aus Harnstoff, Melamin, Thioharnstoff, Cyanamid, Dicyandiamid und Diaminohexan oder Mischungen hiervon.

13. Laminat nach einem der voranstehenden Ansprüche, **dadurch gekennzeichnet, dass** es sich bei der Aminoplastharz enthaltenden Schicht um ein mit dem Aminoplastharz imprägniertes und/oder beschichtetes Material, insbesondere ein Papier, Flies, Faserstoff, Textil oder Gewirke, handelt.

14. Laminat nach einem der voranstehenden Ansprüche, **dadurch gekennzeichnet, dass** die Aminoplastharz enthaltende Schicht eine Oberfläche des Laminats bildet.

15. Laminat nach einem der voranstehenden Ansprüche, **dadurch gekennzeichnet, dass** das Laminat eine Mikrokratzbeständigkeit gemäß Martindale-Test (DIN EN ISO 12947:04/1999 bzw. IHD W-445, Version Mai 2007) von Klasse 1 bis 2 aufweist.

16. Laminat nach einem der voranstehenden Ansprüche, **dadurch gekennzeichnet, dass** das Laminat ausgewählt ist aus einem Imprägnat, einem Schichtstoff, einer Kompaktplatte und einem Laminat, welches einen Holzwerkstoff, eine MDF-, HDF-, OSB, Span- oder Vollholzplatte enthält.

17. Verwendung eines Laminats nach einem der Ansprüche 1 bis 16 als Fußbodenbelag, Arbeitsplatte, Tischplatte oder zur Möbelherstellung.

18. Verwendung eines Aminoplastharzes als Imprägnierharz oder Flüssigoverlay in der Imprägnat- oder Laminatherstellung oder zur Oberflächenbehandlung von Holzwerkstoffen, **dadurch gekennzeichnet, dass** das Aminoplastharz ein Kondensationsprodukt ist, das erhalten wird durch Umsetzen einer Reaktionsmischung bei einem pH von mindestens 8, 0, wobei die Reaktionsmischung, bezogen auf deren Gesamtgewicht,
(1) Formaldehyd in einer Menge von 10 bis 20 Gew.-%,
(2) eine Amino-, Imino- oder Amidgruppen enthaltende Komponente in einer Menge von 25 bis 45 Gew.-%, und
(3) mindestens ein Alkoxysilan, Organoalkoxysilan oder Metallalkoxid in einer Menge von 2 bis 25 Gew.-%,
enthält.

19. Verwendung nach Anspruch 18, **dadurch gekennzeichnet, dass** das Alkoxysilan, Organoalkoxysilan oder Metallalkoxid wie in einem der Ansprüche 2 bis 5 definiert ist und/oder die Reaktionsmischung die zusätzlichen Merkmale eines der Ansprüche 6 bis 8 aufweist und/oder das Umsetzen der Reaktionsmischung wie in einem der Ansprüche 9 bis 11 beschrieben erfolgt und/oder die Amino-, Imino- oder Amidgruppen enthaltende Komponente wie in Anspruch 12 definiert ist.

20. Verfahren zur Herstellung eines Aminoplastharzes zur Verwendung als Imprägnierharz oder Flüssigoverlay oder zur Oberflächenbehandlung von Holzwerkstoffen, umfassend mindestens den folgenden Schritt:
- Umsetzen einer Reaktionsmischung bei einem pH von mindestens 8, 0, wobei die Reaktionsmischung, bezogen auf deren Gesamtgewicht,
(1) Formaldehyd in einer Menge von 10 bis 20 Gew.-%,
(2) eine Amino-, Imino- oder Amidgruppen enthaltende Komponente in einer Menge von 25 bis 45 Gew.-%, und
(3) mindestens ein Alkoxysilan, Organoalkoxysilan oder Metallalkoxid in einer Menge von 2 bis 25 Gew.-%,
enthält.

21. Verfahren nach Anspruch 20, **dadurch gekennzeichnet, dass** das Alkoxysilan, Organoalkoxysilan oder Metallalkoxid wie in einem der Ansprüche 2 bis 5 definiert ist und/oder die Reaktionsmischung die zusätzlichen Merkmale eines der Ansprüche 6 bis 8 aufweist und/oder das Umsetzen der Reaktionsmischung wie in einem der Ansprüche 9 bis 11 beschrieben erfolgt und/oder die Amino-, Imino- oder Amidgruppen enthaltende Komponente wie in Anspruch 12 definiert ist.

## Claims

1. Laminate which comprises at least one layer, which contains an amino resin, **characterised in that** the amino resin is a condensation product, which is obtained by reacting a reaction mixture at a pH of at least 8.0, the reaction mixture, based on the total weight thereof, containing
(1) formaldehyde in an amount of from 10 to 20% by weight,
(2) a component containing amino, imino or amide groups in an amount of from 25 to 45% by weight, and
(3) at least one alkoxysilane, organoalkoxysilane or metal alkoxide in an amount of from 2 to 25% by weight.

2. Laminate according to Claim 1, **characterised in that** the alkoxysilane is a compound of the formula Si(OR)4, the organoalkoxysilane is a compound of the formula R'ₓSi(OR)₄₋ₓ, and the metal alkoxide is a compound of the formula Me(OR)₄,
- R denoting in each case optionally substituted alkyl or aryl, and in particular preferably methyl, ethyl, butyl or propyl;
- R' denoting in each case a halogen, in particular chlorine; optionally substituted alkyl, in particular methyl, ethyl, butyl or propyl; or optionally substituted aryl;
- x denoting a number between 1 and 4; and
- Me denoting a metal, a semi-metal or a transition metal, in particular preferably Al, Ti or Zr.

3. Laminate according to either Claim 1 or 2, **characterised in that** the alkoxysilane or the organoalkoxysilane is selected from the group consisting of tetramethoxysilane, tetraethoxysilane, tetrapropoxysilane, methylglycol orthosilicate, ethylglycol orthosilicate, methyltrimethoxysilane, methyltriethoxysilane, dimethyldimethoxysilane, dimethyldiethoxysilane, ethyltrimethoxysilane, ethyltriethoxysilane, trimethylethoxysilane, 2-chloroethyltriethoxysilane, vinyltrimethoxysilane, vinyltriethoxysilane, vinylmethyldiethoxysilane, vinyltris(2-methyloxyethoxy) silane, phenyltrimethoxysilane, 2-phenylethyltrimethoxysilane, diphenyldimethoxysilane, propyltrimethoxysilane, propyltriethoxysilane, 3-chloropropyltrimethoxysilane, 3-chloropropyltriethoxysilane, propylmethyldimethoxysilane, propylmethyldiethoxysilane, 3-chloropropylmethyldimethoxysilane, 3-chloropropylmethyldiethoxysilane, isobutyltrimethoxysilane, isobutyltriethoxysilane, amyltrimethoxysilane, amyltriethoxysilane, octyltrimethoxysilane, octyltriethoxysilane, cyclohexyltrimethoxysilane, cyclohexylmethyldimethoxysilane, hexadecyltrimethoxysilane and hexadecyltriethoxysilane, and combinations thereof.

4. Laminate according to any one of the preceding claims, **characterised in that** the alkoxysilane or the organoalkoxysilane is functionalised with reactive groups which are suitable for crosslinking with the amino resin.

5. Laminate according to Claim 4, **characterised in that** the reactive groups are selected from epoxide, methacryl, glycidoxy, glycidoxypropyl, amine, hydroxy, carboxy and vinyl or mixtures thereof.

6. Laminate according to any one of the preceding claims, **characterised in that** the reaction mixture contains an organic solvent, in particular dowanol, ethanol or DMSO, as a co-solvent for the alkoxysilane, organoalkoxysilane or metal alkoxide.

7. Laminate according to any one of the preceding claims, **characterised in that** the reaction mixture, based on the total weight thereof, contains formaldehyde in an amount of from 12 to 16% by weight, the component containing amino, imino or amide groups in an amount of from 30 to 40% by weight, and the alkoxysilane, organoalkoxysilane or metal alkoxide in an amount of from 5 to 15% by weight.

8. Laminate according to any one of the preceding claims, **characterised in that** the components contained in the reaction mixture, formaldehyde and the component containing amino, imino or amide groups are precondensed to a level of at least 20%, in particular at least 50%, before the at least one alkoxysilane, organoalkoxysilane or metal alkoxide is added to the reaction mixture.

9. Laminate according to any one of the preceding claims, **characterised in that,** when reacting the reaction mixture, at least 50 mol.% of the at least one alkoxysilane, organoalkoxysilane or metal alkoxide is hydrolysed and/or condensed in the presence of formaldehyde and the component containing amino, imino or amide groups.

10. Laminate according to any one of the preceding claims, **characterised in that** the reaction mixture is reacted at a pH of at least 9.0 and in particular preferably at a pH of from 9.0 to 11.0.

11. Laminate according to any one of the preceding claims, **characterised in that** the reaction mixture is reacted in a temperature range of from 20°C to 90°C, preferably of from 40°C to 85°C, and more preferably of from 60°C to 80°C.

12. Laminate according to any one of the preceding claims, **characterised in that** the component containing amino, imino or amide groups is selected from urea, melamine, thiourea, cyanamide, dicyandiamide and diaminohexane or mixtures thereof.

13. Laminate according to any one of the preceding claims, **characterised in that** the layer containing amino resin is a material impregnated and/or coated with the amino resin, in particular a paper, non-woven fabric, fibrous material, textile or knitted fabric.

14. Laminate according to any one of the preceding claims, **characterised in that** the layer containing amino resin forms a surface of the laminate.

15. Laminate according to any one of the preceding claims, **characterised in that** the laminate has a micro-scratch resistance in accordance with the Martindale test (DIN EN ISO 12947:04/1999 or IHD W-445, version May 2007) of Class 1 to 2.

16. Laminate according to any one of the preceding claims, **characterised in that** the laminate is selected from an impregnate, a laminated material, a compact panel and a laminate which contains a wood material, a MDF, HDF, OSB, chipboard or plywood panel.

17. Use of a laminate according to any one of Claims 1 to 16 as a floor covering, worktop, table top or for producing furniture.

18. Use of an amino resin as an impregnating resin or liquid overlay in the production of an impregnate or laminate, or for the surface treatment of wood materials, **characterised in that** the amino resin is a condensation product which is obtained by reacting a reaction mixture at a pH of at least 8.0, the reaction mixture, based on the total weight thereof, containing
(1) formaldehyde in an amount of from 10 to 20% by weight,
(2) a component containing amino, imino or amide groups in an amount of from 25 to 45% by weight, and
(3) at least one alkoxysilane, organoalkoxysilane or metal alkoxide in an amount of from 2 to 25% by weight.

19. Use according to Claim 18, **characterised in that** the alkoxysilane, organoalkoxysilane or metal alkoxide is as defined in any one of Claims 2 to 5, and/or the reaction mixture has the additional features of any one of Claims 6 to 8, and/or the reaction mixture is reacted as described in any one of Claims 9 to 11, and/or the component containing amino, imino or amide groups is as defined in Claim 12.

20. Method for producing an amino resin for use as an impregnating resin or liquid overlay or for the surface treatment of wood materials, comprising at least the following step:
- reacting a reaction mixture at a pH of at least 8.0, wherein the reaction mixture, based on the total weight thereof, contains
(1) formaldehyde in an amount of from 10 to 20% by weight,
(2) a component containing amino, imino or amide groups in an amount of from 25 to 45% by weight, and
(3) at least one alkoxysilane, organoalkoxysilane or metal alkoxide in an amount of from 2 to 25% by weight.

21. Method according to Claim 20, **characterised in that** the alkoxysilane, organoalkoxysilane or metal alkoxide is as defined in any one of Claims 2 to 5, and/or the reaction mixture has the additional features of any one of Claims 6 to 8, and/or the reaction mixture is reacted as described in any one of Claims 9 to 11, and/or the component containing amino, imino or amide groups is as defined in Claim 12.

## Revendications

1. Stratifié, qui présente au moins une couche contenant une résine aminoplaste,
**caractérisé en ce que** la résine aminoplaste est un produit de condensation, qui est obtenu par conversion d'un mélange réactif à un pH d'au moins 8, 0, où le mélange réactif contient, en référence au poids total de celui-ci,
(1) du formaldéhyde, en une quantité de 10 à 20 % en poids,
(2) un composant contenant des groupes amino, imino ou amide, en une quantité de 25 à 45 % en poids,
et
(3) au moins un alcoxysilane, un organoalcoxysilane ou un alkoxyde métallique en une quantité de 2 à 25 % en poids.

2. Stratifié selon la revendication 1,
**caractérisé en ce que** l'alcoxysilane est un composé de la formule Si(OR)₄, l'organoalcoxysilane est un composé de la formule R'ₓSi(OR)₄₋ₓ et que l'alkoxyde métallique est un composé de la formule Me(OR)₄, où
- R signifie, au choix, alkyle substitué ou aryle, et, particulièrement, de préférence méthyle, éthyle, butyle ou propyle;
- R' signifie respectivement halogène, particulièrement chlore; au choix alkyle substitué, particulièrement méthyle, éthyle, butyle ou propyle, ou, au choix, aryle substitué;
- x signifie un nombre entre 1 et 4 ; et
- Me signifie un métal, un semi-métal ou un métal transitoire, particulièrement, de préférence Al, Ti ou Zr.

3. Stratifié selon revendication 1 ou 2,
**caractérisé en ce que** l'alcoxysilane, respectivement l'organo alcoxysilane est choisi à partir du groupe qui comprend tétraméthoxysilane, tétraéthoxysilane, tétrapropoxysilane, l'orthosilicate de méthyle glycol, orthosilicate d'éthyle glycol, méthyltriméthoxysilane, méthyltriethoxysilane, diméthyldimethoxysilane, diméthyldiéthoxysilane, éthyltriméthoxysilane, éthyltriéthoxysilane, triméthyléthoxysilane, 2-chloréthyltriéthoxysilane, vinyltriméthoxysilane, vinyltriéthoxysilane, vinylméthyldiéthoxysilane, vinyltris(2-méthyloxyéthoxy)silane, phényltriméthoxysilane, 2-phényléthyltriméthoxysilane, diphényldiméthoxysilane, propyltriméthoxysilane, propyltriéthoxysilane, 3-chlorpropyltriméthoxysilane, 3-chloropropyltriéthoxysilane, propylméthyldiméthoxysilane, propylméthyldiéthoxysilane, 3-chloropropylméthyldiméthoxysilane, 3-chloropropyldiéthoxysilane, isobutyltriméthoxysilane, isobutyltriéthoxysilane, amyltriméthoxysilane, amyltriéthoxysilane, octyltriméthoxysilane, octyltriéthoxysilane, cyclohexyltriméthoxysilane, cyclohexylméthyldiméthoxysilane, héxadécyltriméthoxysilane et héxadécyltriéthoxysilane, et des combinaisons de ceux-ci.

4. Stratifié selon l'une des revendications précédentes,
**caractérisé en ce que** l'alcoxysilane, respectivement l'organoalcoxysilane est fonctionnalisé avec des groupes réactifs, qui sont aptes à la réticulation avec la résine aminoplaste.

5. Stratifié selon la revendication 4,
**caractérisé en ce que** les groupes réactifs sont choisis à partir d'époxyde, de métha-cryle, de glycidoxy, de glycidoxypropyle, d'amine, d'hydroxy, de carboxy et de vinyle ou de mélanges de ceux-ci.

6. Stratifié selon l'une des revendications précédentes,
**caractérisé en ce que** le mélange réactif, en tant que co-solvant pour l'alcoxysilane, l'organoalcoxysilane ou l'alkoxyde métallique, contient un solvant organique, particulièrement dowanol, éthanol ou DMSO.

7. Stratifié selon l'une des revendications précédentes,
**caractérisé en ce que** le mélange réactif contient, en référence au poids total de celui-ci, du formaldéhyde, en une quantité de 12 à 16 % en poids, le composant contenant des groupes amino, imino ou amide, en une quantité de 30 à 40 % en poids, et l'alcoxysilane, l'organoalcoxysilane ou un alkoxyde métallique en une quantité de 5 à 15 % en poids.

8. Stratifié selon l'une des revendications précédentes,
**caractérisé en ce que** les composants contenus dans le mélange réactif, formaldéhyde et le composant contenant des groupes amino, imino ou amide, sont précondensés à un degré d'au moins 20 %, particulièrement d'au moins 50 %, avant que l'au moins un alcoxysilane, organoacoxysilane ou alkoxyde métallique soit ajouté au mélange réactif.

9. Stratifié selon l'une des revendications précédentes,
**caractérisé en ce que,** lors de la conversion du mélange réactif, au moins 50 % mol de l'au moins un alcoxysilane, organoalcoxysilane ou alkoxyde métallique sont hydrolysés et / ou condensés en présence de formaldéhyde et du composant qui contient des groupes amino, imino ou amide.

10. Stratifié selon l'une des revendications précédentes,
**caractérisé en ce que** la conversion du mélange réactif est effectuée à un pH d'au moins 9,0, et particulièrement, de préférence à un pH de 9, 0 à 11,0.

11. Stratifié selon l'une des revendications précédentes,
**caractérisé en ce que** la conversion du mélange réactif est effectuée à une température située dans une plage de 20 ° C à 90 ° C, de préférence de 40° C à 85 ° C, et particulièrement, de préférence de 60 ° C à 80 ° C.

12. Stratifié selon l'une des revendications précédentes,
**caractérisé en ce que** le composant contenant des groupes amino, imino ou amide est choisi à partir d'urée, de mélamine, de thio urée, de cyanamide, de dicyandiamide et de diaminohexane ou de mélanges de ceux-ci.

13. Stratifié selon l'une des revendications précédentes,
**caractérisé en ce que** la couche contenant de la résine aminoplaste est un matériau imprégné et / ou revêtu de la résine aminoplaste, particulièrement un papier, un non-tissé, une matière fibreuse, une matière textile ou un tissu à mailles.

14. Stratifié selon l'une des revendications précédentes,
**caractérisé en ce que** la couche contenant de la résine aminoplaste forme une surface du stratifié.

15. Stratifié selon l'une des revendications précédentes
**caractérisé en ce que** le stratifié présente une résistance à l'usure due aux macrofrottements selon le test Martindale (DIN EN ISO 12947:04
/ 1999 respectivement IHD W-445, version de Mai 2007) de classe 1 à 2.

16. Stratifié selon l'une des revendications précédentes,
**caractérisé en ce que** le stratifié est choisi parmi un produit d'imprégnation, un laminé, une plaque compacte et un stratifié, qui contient un matériau à base de bois, une plaque de MDF, de HDF, d'OSB, de copeaux ou de bois massif.

17. Utilisation d'un stratifié selon l'une des revendications 1 à 16 en tant que revêtement de sol, surface de travail, dessus de table ou pour la fabrication de meubles.

18. Utilisation d'une résine aminoplaste, comme résine d'imprégnation ou overlay liquide dans le fabrication d'imprégnés ou de stratifiés, ou pour le traitement de surfaces de matériaux à base de bois,
**caractérisé en ce que** la résine aminoplaste est un produit de condensation, qui est obtenu par conversion d'un mélange réactif à un pH d'au moins 8, 0, où le mélange réactif contient, en référence au poids total de celui-ci,
(1) du formaldéhyde, en une quantité de 10 à 20 % en poids,
(2) un composant contenant des groupes amino, imino ou amide, en une quantité de 25 à 45 % en poids, et
(3) au moins un alcoxysilane, un organoalcoxylsilane ou un alkoxyde métallique, en une quantité de 2 à 25 % en poids.

19. Utilisation selon la revendication 18,
**caractérisée en ce que** l'alcoxysilane, l'organoalcoxysilane ou l'alkoxyde métallique est défini selon l'une des revendications 2 à 5, et / ou que le mélange réactif présente les caractéristiques supplémentaires selon l'une des revendications 6 à 8, et / ou que la conversion du mélange réactif est effectuée come il est décrit dans l'une des revendications 9 à 11, et / ou que le composant contenant des groupes amino, imino ou amide est défini comme dans la revendication 12.

20. Procédé de fabrication d'une résine aminoplaste, destinée à être utilisée comme résine d'imprégnation ou overlay liquide ou pour le traitement de surfaces de matériaux à base de bois, qui comprend au moins l'étape suivante :
- conversion d'un mélange réactif à un pH d'au moins 8, 0, où le mélange réactif contient, en référence au poids total de celui-ci,
(1) du formaldéhyde, en une quantité de 10 à 20 % en poids,
(2) un composant contenant des groupes amino, imino ou amide, en une quantité de 25 à 45 % en poids, et
(3) au moins un alcoxysilane, un organo alcoxy silane ou un alkoxyde métallique, en une quantité de 2 à 25 % en poids.

21. Procédé selon la revendication 20,
caractérisé en que l'alcoxysilane, l'organoalcoxysilane ou l'alkoxyde métallique est défini selon l'une des revendications 2 à 5, et / ou que le mélange réactif présente les caractéristiques supplémentaires selon l'une des revendications 6 à 8, et / ou que la conversion du mélange réactif est effectuée comme il est décrit dans l'une des revendications 9 à 11, et / ou que le composant contenant des groupes amino, imino ou amide est défini comme dans la revendication 12.
